# EUROPEAN PATENT APPLICATION

(11) **EP 2 735 530 A1**
(43) Date of publication of application: **28.05.2014**
(21) Application number: 12425186.9
(22) Date of filing: 21.11.2012
(51) Int. Cl.: B65G 29/00, B65G 47/84

(54) **Star wheel conveyor, particularly for labelling machines**

(71) Applicant: SIDEL S.p.A. con Socio Unico, Parma (IT)
(72) Inventor: Lo Schiavo, Ciro, 43100 Parma (IT); Miglietta, Alessandro, 43100 Parma (IT); Abelzi, Daniele, 43100 Parma (IT)
(74) Representative: D'Angelo, Fabio

(57) **Abstract**

The invention relates to a star wheel conveyor (1) comprising peripheral pockets (2) for receiving articles (A); each pocket (2) having receiving surfaces (4) defined by elements (5) shaped and arranged such as to contact, in use, the lateral surface of an article (A); the receiving elements (5) being movable between:
a first operative configuration, wherein the receiving elements (5) define a first cylindrical surface having a circumference of radius R₁; and
a second operative configuration, wherein the receiving elements (5) define a second cylindrical surface having a circumference of radius R₂ greater than radius R₁.

## Description

### TECHNICAL FIELD

The present invention is directed to a star wheel conveyor for conveying articles, especially containers, on an automated handling line.

### BACKGROUND ART

In the packaging industry, star wheel conveyors are commonly used on automated handling lines to convey articles to and from, or even within, rotary processing units performing operations such as filling, capping or labelling. For example, they may be used to receive articles from a rectilinear conveyor and to convey said articles to a rotating processing unit with a given pitch.

In general, star wheel conveyors are substantially disk shaped and define, at their periphery, a plurality of pockets arranged equally spaced around a central axis. In greater detail, star wheel conveyors typically comprise a pair of disk-like plates centred on said axis, recesses being provided in the peripheries of the disks to form said pockets for receiving the articles to be handled.

The star wheel conveyor is positioned on an automated handling line so that an article advancing along the handling line is received within a pocket as the star wheel conveyor rotates. Upon rotation of the star wheel conveyor, the article is retained within that pocket before being released at a defined point, typically to a processing unit or to a further conveyor. Each article is generally retained within a respective pocket by being supported between contact surfaces of the pocket itself and a guide rail that encircles at least part of the star wheel disks periphery.

Star wheel conveyors may be used with several types of containers, e.g. bottles, cans and tins. It will be appreciated, however, that this list is not exhaustive.

Final users of star wheel conveyors - such as companies active in the food industry, or in the pharmaceutical industry - may very often be faced with the need to process more than one type of container on a same handling line. Furthermore, it often occurs that containers of different sizes and capacities need to be processed, as is very often the case with beverage bottles which are sold on the market in a relatively large variety of formats/capacities.

For a long time, star wheel conveyors have been designed and configured to handle containers of a specific shape and size. As a result, the star wheel conveyor had to be replaced every time a different container was introduced on a given handling line.

Clearly enough, this is undesirable in that it results in significant production downtimes. Furthermore, the final user has to keep a stock of star wheels adapted to handle container of different sizes.

Several attempts have been made to overcome this problem. An adjustable star wheel conveyor is known, for instance, from WO2009/040531, wherein every pocket of the star wheel conveyor has a fixed shape and size and comprises jaws defining between each other a pocket of a fixed, smaller size; the jaws being movable between an extended position, where they are in coincidence with the pocket, whereby the star wheel conveyor is configured to receive containers in a smaller pocket, and a fully retracted position, where they are clear of the pocket, whereby the star wheel conveyor is configured to receive containers in the larger pocket.

However, an adjustable star wheel conveyor as the one known from WO2009/040531 can only enable processing of two container sizes, therefore the drawback of having and stocking several star wheel conveyors shall still be present, whenever containers of more than two formats/sizes need to be processed on a same handling line, as is very often the case in the beverage industry.

Therefore, the need is felt in the art for an alternative adjustable star wheel conveyor whereby the drawbacks described above can be conveniently overcome.

In particular, the need is felt for an adjustable star wheel conveyor which may help downscale design and manufacturing costs for both processing machine producers and final users. Most of all, the need is felt for an adjustable star wheel conveyor that may bring about a significant reduction of machine downtime and of stock room requirement.

It is therefore an object of the present invention to provide an adjustable star wheel conveyor, which makes it possible to meet at least one of the needs mentioned above in a simple and cost-effective manner.

### DISCLOSURE OF THE INVENTION

The object identified above is achieved by the present invention, as it relates to an adjustable star wheel conveyor according to claim 1.

### BRIEF DESCRIPTION OF THE DRAWINGS

A preferred embodiment is hereinafter disclosed for a better understanding of the present invention, by mere way of non-limitative example and with reference to the accompanying drawings, in which:
- Figure 1 shows a schematic perspective view of a star wheel conveyor according to the invention;
- Figure 2 shows, in larger scale, a top view, with parts removed, of a detail of the star wheel conveyor of Figure 1 in a first operative configuration;
- Figure 3 shows a further, larger-scale top view of the detail of Figure 2 in a second operative configuration;
- Figure 4 shows a schematic exploded view of a section of the star wheel conveyor of Figure 1; and
- Figure 5 shows a larger-scale detail of the star wheel conveyor of Figure 4.

### BEST MODE FOR CARRYING OUT THE INVENTION

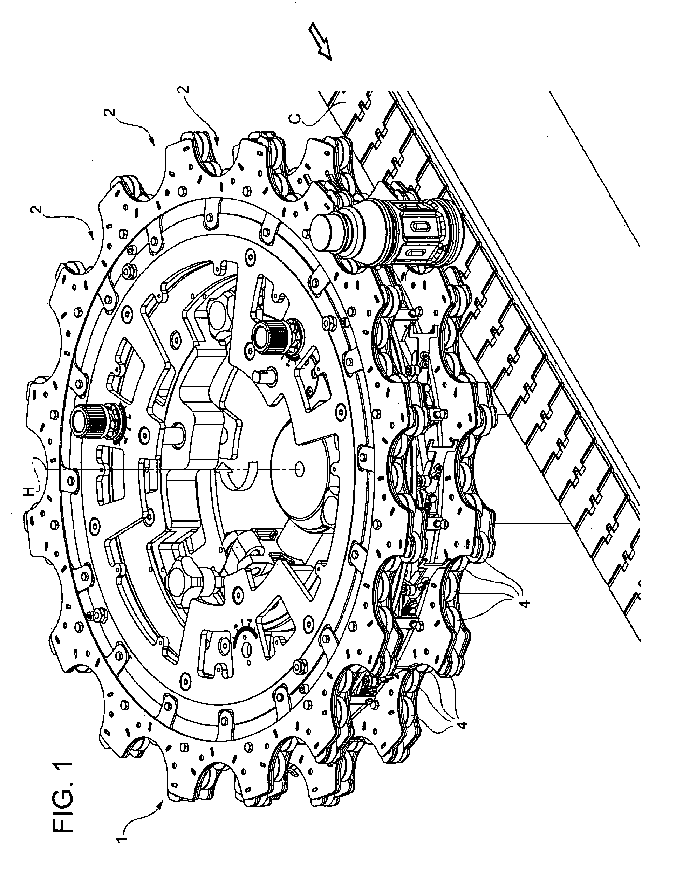

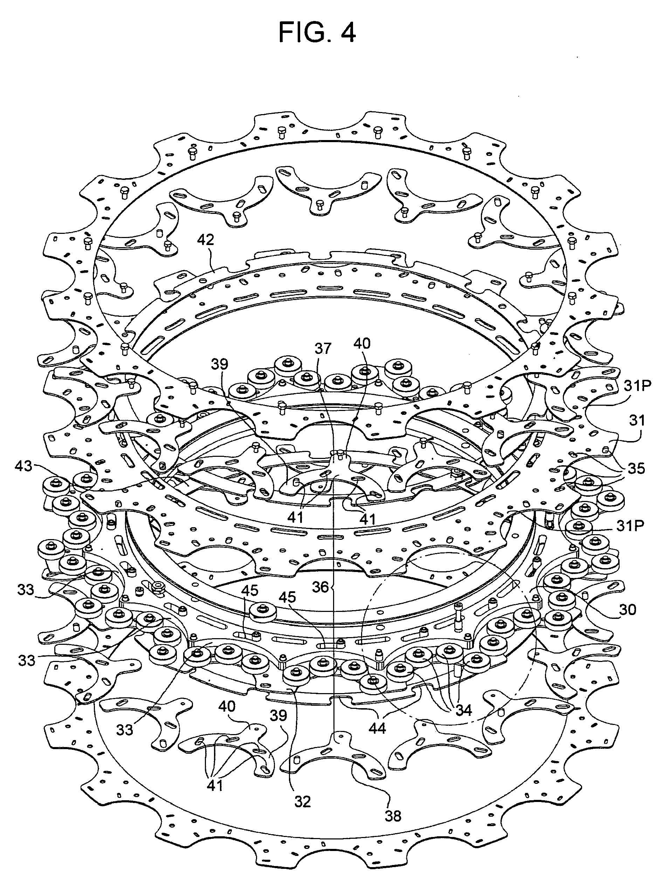

In Figures 1 and 4 numeral 1 indicates as a whole a star wheel conveyor for conveying articles A, especially containers, on an automated handling line.

In particular, star wheel conveyor 1 is substantially disk shaped and defines, at its periphery, a plurality of pockets 2 arranged equally spaced around a central axis H. In greater detail, star wheel conveyor 1 comprises at least a crown-shaped assembly 3 centred on axis H. Recesses are provided in the peripheries of assembly 3 to define pockets 2 for receiving the articles A to be handled.

Typically, as in the embodiment illustrated in Figure 1, star wheel conveyor 1 may comprise two crown-shaped assemblies 3 stacked one above the other, generally at a given distance D from one another so as to better embrace the lateral surface of articles A which extends along a vertical axis substantially parallel to central axis H.

Star wheel conveyor 1 typically forms part of an automated handling line defining an article path which may comprise a plurality of rectilinear and/or curvilinear sections. By way of example, in the case illustrated in Figures 1, star wheel conveyor 1 is operatively coupled with a rectilinear conveyor C, so that an article A advancing along the handling line (along article path) is received within a pocket 2 as star wheel conveyor 1 rotates. Upon rotation of star wheel conveyor 1, article A is retained within a pocket 2 to be subsequently released at a defined release zone, typically to be delivered to a processing unit or to a further conveyor (not shown). Each article A is retained within a respective pocket 2 by being supported between receiving surfaces 4 of pocket 2 and a guide rail (not shown) that encircles at least part of the periphery of star wheel assembly 3.

Furthermore, each pocket 2 of star wheel conveyor 1 may comprise an article supporting mechanism for holding a respective articles A at a given height, while allowing them to rotate about their axes as they are advanced along an article path upon rotation of star wheel conveyor 1. By way of example, when articles 2 are bottles, these supporting mechanisms are conveniently adapted to hold bottles by their neck portions (as is typically the case in filling machines), or by their body portions below their necks (as is common in labelling machines).

In particular, receiving surfaces 4 of pocket 2 are defined by a plurality of receiving elements 5 that are shaped and arranged such as to come into contact, in use, with the lateral surface of a respective article A.

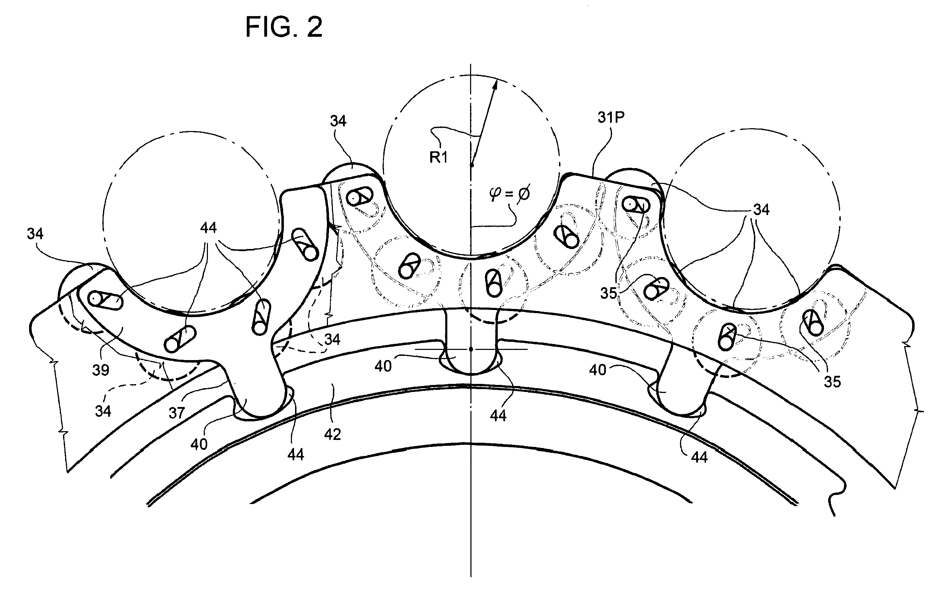

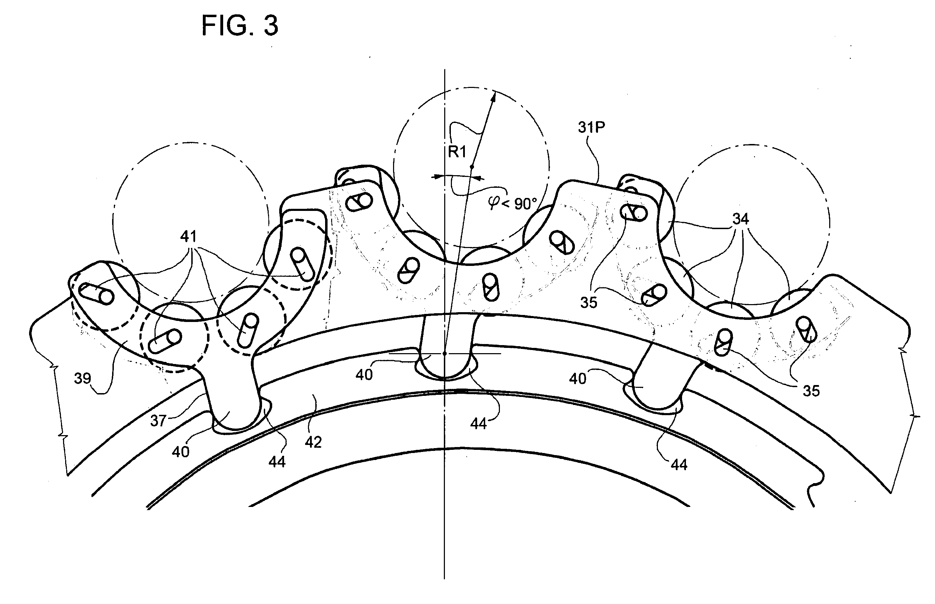

Advantageously, receiving elements 5 are movable between:
a first operative configuration (see Figure 2), wherein receiving elements 5 are arranged to come into contact with the lateral surface of a first axially symmetrical article A at a plurality of points substantially all lying in a cylindrical surface having, as its directrix, a circumference of radius R₁; and
a second operative configuration (see Figure 3), wherein receiving elements 5 are arranged to come into contact with the lateral surface of a second axially symmetrical article of a larger diameter with respect to the first axially symmetrical article A, at a plurality of points substantially all lying in a cylindrical surface having, as its directrix, a circumference of radius R₂ greater than radius R₁.

In the context of this disclosure, by the expression "cylindrical surface" reference is made to a surface substantially traced by a straight line (generatrix of the cylindrical surface) which moves along a given fixed curve (directrix of the cylindrical surface) while remaining parallel to a given fixed straight line.

Accordingly, it shall be understood that, when articles A are bottles comprising at least an axially symmetrical body portion, receiving elements 5 are shaped and arranged such as to come into contact with the lateral surface of bottle A at a plurality of points substantially all at the same distance from the axis of bottle A.

Features and operation of receiving elements 5 - particularly as concerns the adjustment of their position relative to radially fixed parts of star wheel conveyor 1 - shall be described in greater detail in the following, with direct reference to Figures 2 to 5.

Figure 4 is an exploded perspective view of a disk-like assembly 3 of star conveyor 1 as shown in Figure 1.

Assembly 3 advantageously comprises a crown-shaped main plate 30 interposed between two holding plates 31, 32, also similarly crown-shaped and comprising peripheral portions projecting radially outwardly beyond the periphery of main plate 30, so as to define pockets 2 for receiving, in use, articles A. In particular, peripheral portions 31P, 32P of holding plates 31, 32 are preferably shaped so as to define pockets 2 having a substantially semicircular contour.

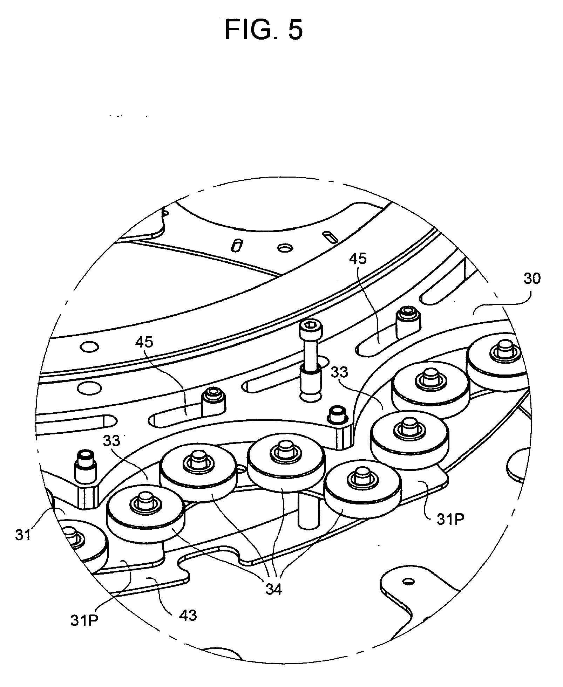

Furthermore, given the difference in radial size between main plate 30 and holding plates 31, 32, for each pocket 2 a recess 33 is defined between holding plates 31, 32 for holding receiving elements 5 (see also, for the sake of convenience, Figure 5 which provides a larger-scale view of this detail).

In particular, in the embodiment illustrated in the drawings of Figures 1 to 5, receiving elements may consist of a plurality of idle rollers 34 rotatable about respective axes extending substantially parallel to central axis H, the lateral surfaces of rollers 34 defining, at least in part, receiving surfaces 4 of pockets 2.

In greater detail, for each recess 33, holding plates 31, 32 advantageously have a plurality of first slits 35 - corresponding, in number, to rollers 34 - extending radially with respect to the semicircular contour of peripheral portions 31P, 32P of holding plates 31, 32, for receiving the shafts of idle rollers 34. Thus, each roller 34 belonging to a group of rollers defining receiving surfaces 4 of a given pocket 2 is movable, within a corresponding recess 33, along radial slit 35.

Furthermore, assembly 3 comprises, for each pocket 2, actuator means 36 for adjusting the position of rollers 34 - and hence of receiving surfaces 4 - relative to main plate 30.

As illustrated in Figures 4 and 5, actuator means 36 comprises a pair of movable guiding plates 37, 38, arranged substantially stacked above holding plate 31 and below holding plate 32, respectively.

Each movable guiding plate 37, 38 comprises a C-shaped portion 39 for operatively engaging, by the respective shafts, a group of rollers 34, and a fixing portion 40 projecting from C-shaped portion 39 and which is pivotably fixed to main plate 30.

In particular, movable guiding plates 37, 38 have a plurality of second slits 41 - corresponding, in number, to rollers 34 - extending transversally with respect to corresponding radial first slits 35 with which they are operatively coupled, as shall be explained in greater detail in the following, for receiving the shafts of idle rollers 34.

Thus, each roller 34 belonging to a group of rollers defining receiving surfaces 4 of a given pocket 2 is bound move, within a corresponding recess 33 and along radial slit 35, within a corresponding second slit 41.

Pivoting of a set of adjustable guiding plates 37, 38, i.e. of actuator means 36 causes the rollers 34 in a corresponding pocket 2 to move, within the respective recess 33, along a trajectory which is, in practice, determined by the movement of guiding plates 37, 38, which define second slits 41, relative to holding plates 31, 32, which define first slits 35.

In particular, each set of guiding plates 37, 38 - i.e. each actuator means 36 - is pivotable between two end positions corresponding, from a functional viewpoint, to the first and second operative configurations of receiving elements 5.

This is illustrated more clearly in Figures 2 and 3 which show how movement of receiving elements 5 (in the embodiment at issue, rollers 34) along radial first slits 35 is operatively and functionally coupled with movement of adjustable guiding plates 37, 38 between respective end positions.

On the one hand, Figure 2 illustrates, in greater detail, a fully retracted position of adjustable guiding plates 37, 38, which corresponds functionally to the second operative configuration of receiving elements 5, wherein star wheel conveyor 1 is adapted to receive and convey axially symmetrical articles A (particularly, bottles) of second radius R₂ (maximum nominal size with which star wheel conveyor 1 is compatible).

On the other hand, Figure 3 illustrates a fully extended position of adjustable guiding plates 37, 38, which corresponds functionally to the first operative configuration of receiving elements 5, wherein star wheel conveyor 1 is adapted to receive and convey axially symmetrical articles A (particularly, bottles) of first radius R₁ (minimum nominal size with which star wheel conveyor 1 is compatible).

It shall be apparent that, given the structural and functional arrangement described above, by shifting adjustable guiding plates 37, 38 to any intermediate position comprised between the end positions illustrated in Figures 2 and 3, receiving elements 5 correspondingly may advantageously be moved into any intermediate operative configuration, wherein star wheel conveyor 1 is adapted to receive and convey axially symmetrical articles A having a radius comprised in the range from first radius R₁ to second radius R₂.

Advantageously, star wheel conveyor 1 comprises means for pivoting all actuator means 36, simultaneously - in the embodiment illustrated in the drawings of the Figures, guiding plates 37, 38 - of star wheel conveyor 1, so that all pockets 2 simultaneously become adapted to receive and convey axially symmetrical articles A having a given radius comprised in the range from first radius R₁ to second radius R₂.

As illustrated in Figure 4, the pivoting means mentioned above may advantageously comprise actuating wheels 42, 43 defining a plurality of recesses 44 for engaging fixing portions 40 of guiding plates 37, 38, actuating wheels 42, 43 being controlledly rotatable about central axis H. Furthermore, guiding plates 37, 38 advantageously pivot about shafts which are free to slide along arced slits 45 of main plate 30. Thus, the end positions assumable by guiding plates 37, 38 are conveniently defined by the angular extension of arc slits 45.

Accordingly, by simply rotating actuating wheels 42, 43 about central axis H, pivoting of all guiding plates 37, 38 between the respective end positions defined by arced slits 45 is obtained, so that, in a corresponding manner, all receiving elements 5 are moved between the respective first and second operative configurations.

Thus, star wheel conveyor 1 is fully adjustable to receive and convey (axially symmetrical) articles A having a radius in the range from first radius R₁ to second radius R₂.

From the analysis of the features of the star wheel conveyor disclosed above, the advantages which can be obtained are clear.

In particular, by virtue of the star wheel conveyor of the invention, via actuation of actuators 35, the position of receiving elements 5 substantially defining the size of pockets 2 may be finely and easily adjusted within a given range.

The fine adjustability made available by star wheel conveyor 1 according to the invention makes it possible for the user to modify the configuration of a processing (e.g. labelling) machine including the star conveyor, since by acting upon actuators 35 star wheel conveyor 1 may quickly and easily be made selectively fit for receiving and conveying articles - particularly bottles - of a given size/format.

On top of that, a virtually infinite number of intermediate size (radius R) values can be conveniently set for pockets 2 of star wheel conveyor 1 according to the invention. This involves a dramatic improvement in terms of versatility with respect to other solutions known in the art.

Finally, it is clear that modifications and variants not departing from the scope of protection of the independent claims can be made to the disclosed and shown method and loading unit.

## Claims

1. A star wheel conveyor (1) for conveying articles (A) on an automated handling line, comprising, at its periphery, a plurality of pockets (2) arranged around a central axis (H) for receiving said articles (A); each pocket (2) having receiving surfaces (4) defined by receiving elements (5) coming into contact, in use, with the lateral surface of a respective article (A); **characterised in that** said receiving elements (5) are movable between:
a first operative configuration, wherein said receiving elements (5) define a first cylindrical surface having a circumference of radius R₁; and
a second operative configuration, wherein receiving elements (5) define a second cylindrical surface having a circumference of radius R₂ greater than radius R₁.

2. The star wheel conveyor according to Claim 1, **characterised by** comprising adjusting means (36; 42, 43) configured to cause, at once, the movement of all said receiving elements (5) of said plurality of pockets (2).

3. The star wheel conveyor according to Claim 1 or 2, **characterised by** comprising at least a crown-shaped assembly (3) centred on said axis (H), said pockets (2) being defined in the periphery of said at least one assembly (3); said assembly (3) defining, for each pocket (2) a recess (33) for holding said receiving elements (5); said receiving elements (5) consisting of idle rollers (34) rotatable about respective axes extending substantially parallel to said central axis (H), the lateral surfaces of said rollers (34) defining, at least in part, said receiving surfaces (4).

4. The star wheel conveyor according to Claim 3, **characterised in that** said assembly (3) comprises a crown-shaped main plate (30) interposed between two holding plates (31, 32) also similarly crown-shaped and comprising peripheral portions (31P, 32P) projecting radially outwardly beyond the periphery of said main plate (30), said recesses (33) being defined between said holding plates (31, 32); said holding plates (31, 32) having a plurality of first slits (35) extending radially with respect to the semicircular contour of said peripheral portions (31P, 32P) for receiving the shafts of said idle rollers (34), so that each roller (34) is movable, within a respective recess (33), along a radial slit (35).

5. The star wheel conveyor according to Claim 4, **characterised by** further comprising, for each said pocket (2), actuator means (36) for adjusting the position of said rollers (34) relative to said main plate (30); said actuator means (36) comprising a pair of movable guiding plates (37, 38), arranged substantially stacked above holding plate (31) and below holding plate (32), respectively; each movable guiding plate (37, 38) comprising a portion (39) for operatively engaging, by the respective shafts, a group of said rollers (34) and a fixing portion (40) projecting from said engaging portion (39) and which is pivotably fixed to said main plate (30).

6. The star wheel conveyor according to Claim 5, **characterised in that** said movable guiding plates (37, 38) have a plurality of second slits (41) extending transversally with respect to corresponding said radial first slits (35), with which they are operatively coupled, for receiving the shafts of said idle rollers (34).

7. The star wheel conveyor according to Claim 5 or 6, **characterised in that** each set of guiding plates (37, 38) is pivotable between two end positions functionally corresponding to said first and second operative configurations of said receiving elements (5).

8. The star wheel conveyor according to any one of Claims 5 to 7, **characterised by** comprising actuating wheels (42, 43) being controlledly rotatable about said central axis (H) and defining a plurality of recesses (44) for engaging fixing portions (40) of said movable guiding plates (37, 38); said guiding plates (37, 38) being pivotable about shafts which are slidably engaged by arced slits (45) of said main plate (30).

9. A processing machine, comprising a unit for processing articles (A) and a star wheel conveyor according to any one of Claims 1 to 8 for delivering said articles (A) to said processing unit.
